(19) Europäisches Patentamt
European Patent Office
Office européen des brevets

(11) **EP 1 859 933 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
*B32B 27/20* *(2006.01)*   *B32B 27/36* *(2006.01)*
*B65D 65/40* *(2006.01)*   *G03C 1/795* *(2006.01)*
*G09F 3/00* *(2006.01)*

(21) Anmeldenummer: **07009662.3**

(22) Anmeldetag: **15.05.2007**

(54) **Mehrschichtige haftvermittelnde, weisse Polyesterfolie**

Adhesion-promoting white multilayer film

Film multicouche blanc ameliorant l'adherence

(84) Benannte Vertragsstaaten:
**DE FR GB LU**

(30) Priorität: **24.05.2006 DE 102006024323**

(43) Veröffentlichungstag der Anmeldung:
**28.11.2007 Patentblatt 2007/48**

(73) Patentinhaber: **Mitsubishi Polyester Film GmbH
65203 Wiesbaden (DE)**

(72) Erfinder:
• **Jesberger, Martin, Dr.
55122 Mainz (DE)**

• **Peiffer, Herbert, Dr.
55126 Mainz (DE)**
• **Hilkert, Gottfried, Dr.
55291 Saulheim (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**WO-A-01/60140     DE-A1- 10 026 166**

**Beschreibung**

Die Erfindung betrifft eine mehrschichtige, weiße, biaxial orientierte Polyesterfolie umfassend eine Basisschicht (B), welche einen thermoplastischen Polyester und als alleiniges Weißpigment Bariumsulfat enthält, sowie mindestens eine Deckschicht (A). Die Deckschicht (A) enthält neben dem alleinigen Weißpigment Bariumsulfat zusätzlich ein Antiblockmittel in einer vorgegebenen Größe und Konzentration. Die erfindungsgemäße Folie besitzt mindestens eine Oberfläche, die eine gute Haftung zu anderen Polymer- oder Metall-Schichten oder Druckfarben aufweist. Dazu wird diese Oberfläche beispielsweise mit einer wasserlöslichen haftvermittelnden Schicht in-line beschichtet. Die Erfindung betrifft weiterhin ein Verfahren für die Herstellung der Folie und ihre Verwendung.

Weiße, biaxial orientierte Polyesterfolien sind nach dem Stand der Technik bekannt.

Die DE-C-26 47 713 beschreibt einen photographischen, biaxial orientierten opaken Schichtenträger, der aus einem linearen Polyester besteht und als alleiniges teilchenförmiges Pigment Bariumsulfat in einer Menge von 5 bis 50 Gew.-% enthält. Die Bariumsulfatteilchen haben eine durchschnittliche Korngröße von 0,5 bis 10 $\mu$m, wobei 99,9 % der Teilchen die tatsächliche Korngröße von 50 $\mu$m nicht überschreitet. Der photographische, biaxial orientierte opake Schichtenträger zeichnet sich durch einen besonders hohen Weißgrad und durch eine besonders hohe Opazität aus, ohne dass der Schichtenträger durch in ihm enthaltene Zusatzstoffe während der Herstellung verfärbt wird. Außerdem weist er eine geringe Dichte, einen guten Spiegelglanz und eine geringe Gesamtlichtdurchlässigkeit auf. Die Folie hat jedoch noch Defizite bei ihrer Herstellung (keine optimale Rollenaufmachung) und in den optischen Eigenschaften.

Die EP-A-1 125 966 beschreibt eine weiß-opake Folie mit einer Dicke im Bereich von 10 bis 500 $\mu$m, die als Hauptbestandteil einen kristallisierbaren Thermoplasten enthält, wobei die Folie mindestens Bariumsulfat als Weißpigment, mindestens einen UV-Stabilisator als Lichtschutzmittel, mindestens ein Flammschutzmittel und mindestens einen optischen Aufheller enthält. Der Anteil Bariumsulfat in der Folie liegt in einem Bereich von 0,2 bis 40 Gew.-%, der UV-Stabilisator als Lichtschutzmittel in einem Bereich von 0,01 bis 5 Gew.-%, das Flammschutzmittel in einem Bereich von 0,5 bis 30,0 Gew.-% und der optische Aufheller in einem Bereich von 10 bis 50.000 ppm, bezogen auf das Gewicht des Thermoplasten. Durch die vielfältige Eigenschafts-Kombination eignet sich die Folie für verschiedene Anwendungen, beispielsweise für Innenraumverkleidungen, für den Messebau und Messeartikel, für Displays und für Schilder, für Etiketten, für Schutzverglasungen von Maschinen und Fahrzeugen, im Laden- und Regalbau, als Werbeartikel, Kaschiermedium und in Lebensmittelanwendungen. Die Folie hat jedoch noch Defizite bei ihrer Herstellung (keine optimale Rollenaufmachung) und in den optischen Eigenschaften.

Die EP-A-1 125 967 betrifft eine weiß-opake Folie mit niedriger Transparenz aus einem kristallisierbaren Thermoplasten, deren Dicke im Bereich von 10 bis 500 $\mu$m liegt. Die Folie enthält mindestens Bariumsulfat als Weißpigment sowie einen optischen Aufheller und zeichnet sich durch eine gute Verstreckbarkeit, durch eine niedrige Transparenz sowie durch sehr gute optische und mechanische Eigenschaften aus. Das Bariumsulfat und/oder der optische Aufheller werden entweder direkt beim Rohstoffhersteller in den Thermoplasten eingearbeitet oder als Masterbatch bei der Folienherstellung zudosiert. Die Folie ist auf Grund ihrer Eigenschaftskombination für vergleichbare Anwendungen wie in der EP-A-1 125 966 beschrieben geeignet. Die Folie hat jedoch Defizite bei ihrer Herstellung (keine optimale Rollenaufmachung) und in den optischen Eigenschaften.

Aufgabe der vorliegenden Erfindung war es daher, eine weiße, biaxial orientierte Polyesterfolie bereitzustellen, die sich gegenüber den im Stand der Technik bekannten Polyesterfolien durch verbesserte Eigenschaften, insbesondere durch

- eine verbesserte Herstellbarkeit (d. h. durch eine verbesserte Wickelung),
- ein verbessertes Verarbeitungsverhalten,
- verbesserte optische Eigenschaften (Glanz, Erscheinungsbild),
- eine gute Haftung zu Farben, Klebern, Primern, metallischen und keramischen Schichten

auszeichnet.

Die Aufgabe wird erfindungsgemäß durch die Bereitstellung einer weißen, koextrudierten, biaxial orientierten Polyesterfolie mit einer Basisschicht (B) und mindestens einer Deckschicht

(A) gelöst, wobei

a) die Basisschicht (B) als alleiniges weißfärbendes Pigment Bariumsulfat in einer Konzentration von 5 bis 25 Gew.-% enthält (bezogen auf das Gewicht der Basisschicht (B)) und

b) die Deckschicht (A) als alleiniges weißfärbendes Pigment Bariumsulfat in einer Konzentration von 5,0 bis 25,0 Gew.-% enthält und zusätzlich 0,01 bis 4,0 Gew.-% eines Antiblockmittels mit einem mittleren Durchmesser ($d_{50}$-Wert) im Bereich von 2,0 bis 8,0 $\mu$m aufweist (Gew.-%-Angaben bezogen auf das Gewicht der Deckschicht (A)) und

c) zumindest eine der beiden Folienoberflächen haftvermittelnd ausgerüstet ist.

Die weiße, biaxial orientierte Folie gemäß der vorliegenden Erfindung ist zumindest zweischichtig aufgebaut. Sie besteht dann aus der Basisschicht (B) und der auf dieser durch Coextrusion aufgebrachten Deckschicht (A), wobei beide Schichten als alleiniges weißfärbendes Pigment Bariumsulfat enthalten und die Deckschicht (A) ein zusätzliches, für die Herstellung der Folie (Wickelung) und die Verbesserung der optischen Eigenschaften förderliches Antiblockmittel enthält. Die erfindungsgemäße Folie ist darüber hinaus auf zumindest einer Folienoberfläche haftvermittelnd ausgerüstet und weist beispielsweise eine haftvermittelnde Schicht auf, die als wässrige Dispersion auf die Folie aufgebracht wird.

In der bevorzugten Ausführungsform ist die Folie drei- oder mehr als dreischichtig, beispielsweise vier- oder fünfschichtig aufgebaut.

Im Falle der bevorzugten dreischichtigen Ausführungsform besteht die Folie aus der Basisschicht (B), der Deckschicht (A) und einer der Deckschicht (A) gegenüberliegenden Deckschicht (C) - Schichtaufbau ABC. Besonders bevorzugt ist hierbei der symmetrische dreischichtige Aufbau (ABA), bei dem die Schichten (A) und (C) im Rahmen von produktionsbedingten Schwankungen als gleich anzusehen sind. Dieser Folienaufbau bringt hinsichtlich einer einwandfreien Verarbeitung der Folie die besten Voraussetzungen mit sich. So besitzen beispielsweise unsymmetrische Folienaufbauten wie beispielsweise (ABC) oder insbesondere der (AB)-Aufbau eine bestimmte Rollneigung (engl. Curling), was unerwünscht ist.

Es wurde gefunden, dass bei der alleinigen Verwendung von Bariumsulfat als einfärbendes Pigment (Weißpigment) die Folie sich durch einen besonders hohen Weißgrad und durch eine besonders hohe Opazität auszeichnet und darüber hinaus weniger anfällig gegenüber Einreißen und Delaminierung wird. Die Zugabe des Bariumsulfats erfolgt bevorzugt bei der Rohstoffherstellung, wobei die Bariumsulfatteilchen üblicherweise zu dem Glykol hinzugegeben werden, aus dem der Polyester hergestellt wird. Die Zugabe der Bariumsulfatteilchen über die Masterbatchtechnologie (z. B. bei der Extrusion) ist prinzipiell ebenfalls möglich, hat aber den Nachteil, dass die Folie sich dann im Gelbgrad verschlechtert.

## Basisschicht (B)

Die Basisschicht (B) der Folie besteht bevorzugt zu mindestens 80 Gew.-%, insbesondere zu mindestens 85 Gew.-% und besonders bevorzugt zu mindestens 90 Gew.-% aus einem thermoplastischen Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat, PCDT)] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen dann aus anderen aliphatischen, cycloaliphatischen oder aromatischen Diolen bzw. anderen Dicarbonsäuren. Bevorzugt besteht die Basisschicht aus Polyethylenterephthalat. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkananteil geradkettig oder verzweigt sein kann.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

## Deckschicht (A)

Für die Deckschicht (A), für eine eventuell vorhandene weitere Deckschicht (C) und für eventuell vorhandene Zwischenschichten (D) und (E) werden bevorzugt die gleichen Polymere verwendet wie sie zuvor für die Basisschicht (B) angegeben wurden. Insbesondere enthalten die Basisschicht und die weiteren Schichten identische Polymere (Polyester).

## Weißpigment

Zur Erzielung der vorgenannten Eigenschaften, insbesondere des gewünschten Weißgrades und der gewünschten Opazität der Folie, wird in die Basisschicht (B) und zumindest in eine Deckschicht (A), eventuell aber auch in vorhandene andere Schichten, das notwendige Weißpigment eingearbeitet. Die Folie enthält erfindungsgemäß als alleiniges Weißpigment Bariumsulfat, wobei die Menge an Bariumsulfat im Bereich zwischen 5,0 und 25,0 Gew.-%, bezogen auf das Gewicht des kristallisierbaren Thermoplasts, liegt. Vorzugsweise wird das Bariumsulfat bei der Rohstoffherstellung zudosiert, wobei die Bariumsulfatteilchen üblicherweise zu dem Glykol hinzugegeben werden, aus dem der Polyester hergestellt wird.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36, und Nr. 11, 36-31 (1974), beschrieben sind, hergestellt werden.

Um zu dem gewünschten Weißgrad (bevorzugt > 70) und zu der gewünschten niedrigen Transparenz (bevorzugt < 40 %) der Folie zu gelangen, ist die Basisschicht (B) erfindungsgemäß hochgefüllt. Die Menge an Bariumsulfat zur Erzielung der gewünschten niedrigen Transparenz beträgt erfindungsgemäß 5,0 bis 25,0 Gew.-%, bevorzugt 10,0 bis 25,0 Gew.-% und besonders bevorzugt 15,0 bis 25,0 Gew.-%, bezogen auf das Gesamtgewicht der sie enthaltenden Schicht.

Die mittlere Teilchengröße des Bariumsulfats ist relativ klein und liegt vorzugsweise im Bereich von 0,1 bis 5,0 $\mu$m, besonders bevorzugt im Bereich von 0,2 bis 3 $\mu$m.

Zu einer weiteren Steigerung des Weißgrades können in einer besonderen Ausführungsform geeignete optische Aufheller der Basisschicht und/oder den anderen Schichten zugesetzt werden. Geeignete optische Aufheller sind beispielsweise Hostalux® KS der Firma Clariant oder Eastobrite® OB-1 der Firma Eastman.

Erfindungsgemäß enthält die Deckschicht (A), gegebenenfalls auch die weitere Deckschicht (C) und gegebenenenfalls weitere Zwischenschichten (D) und (E), als alleiniges Weißpigment Bariumsulfat von 5,0 bis 25,0 Gew.-%. Die Konzentration des Weißpigmentes wird dabei so gewählt, dass der Weißgrad (nach Berger) der Folie größer als 70 ist. Im anderen Fall ist die Folie für die bevorzugte Anwendung (z. B. photographischer Schichtträger, Rundumetikett, medizinische Anwendung) von den optischen Eigenschaften her weniger geeignet, da sie zu durchscheinend ist.

Enthält die Deckschicht (A) ein Weißpigment, bei dem die Konzentration des weißfärbenden Pigmentes kleiner als 5,0 Gew.-% ist, so geht der brillante weiße Charakter der Folie verloren, und der nachfolgend aufgebrachte Druck auf dieser Seite erscheint dem Betrachter fehlerhaft. Enthält die Deckschicht (A) dagegen ein weißfärbendes Pigmentsystem, bei dem die Konzentration des weißfärbendes Pigmentes größer als 25,0 Gew.-% ist, so ist die Gefahr groß, dass das Weißpigment auskreidet.

Es wurde gefunden, dass die Wickelbarkeit der Folie und die Rollenaufmachung deutlich verbessert werden können, wenn die Deckschicht (A) und gegebenenfalls auch die weitere Deckschicht (C) ein Antiblockmittel enthalten. Dabei wurde festgestellt, dass insbesondere der mittlere Partikeldurchmesser $d_{50}$ und die Konzentration des verwendeten Antiblockmittels in der Deckschicht (A) für eine gute Wickelbarkeit und für eine gute Verarbeitbarkeit der Folie von Bedeutung sind.

Zur Verbesserung der Wickelung und Verarbeitbarkeit der Folie enthält zumindest die Deckschicht (A) ein Antiblockmittel, bei dem der mittlere Durchmesser ($d_{50}$-Wert) im Bereich von 2,0 bis 8,0 $\mu$m liegt.

In der bevorzugten Ausführungsform enthält die Deckschicht (A) ein Antiblockmittel, bei dem der mittlere Durchmesser im Bereich von 2,1 bis 7,0 $\mu$m liegt, und in der besonders bevorzugten Ausführungsform enthält die Deckschicht (A) ein Antiblockmittel, bei dem der mittlere Durchmesser im Bereich von 2,2 bis 6,0 $\mu$m liegt.

Enthält die Deckschicht (A) dagegen ein Antiblockmittel, bei dem der mittlere Durchmesser außerhalb des bevorzugten Bereiches liegt, so wirkt sich dies negativ auf die Wickelung, die Verarbeitbarkeit und auf die optischen Eigenschaften der Folie aus.

Enthält die Deckschicht (A) ein Antiblockmittel, bei dem der mittlere Durchmesser größer als 8,0 $\mu$m ist, so werden die optischen Eigenschaften und die Wickelung der Folie schlechter. Enthält die Deckschicht (A) der Folie dagegen ein Antiblockmittel, bei dem der mittlere Durchmesser kleiner als 2,0 $\mu$m ist, so wird die Wickelung der Folie und damit die Rollenaufmachung schlechter.

Die Deckschicht (A) und gegebenenfalls auch die weitere Deckschicht (C) werden zur Verbesserung des Wickelverhaltens und der Verarbeitbarkeit vergleichsweise hoch mit Antiblockmittel gefüllt. Die Konzentration des Antiblockmittels in der Deckschicht (A) und gegebenenfalls auch in der weiteren Deckschicht (C) liegt in der bevorzugten Ausführungsform zwischen 0,05 und 3,5 Gew.-% und in der besonders bevorzugten Ausführungsform zwischen 0,1 und 3,0 Gew.-% und richtet sich im Wesentlichen nach den zu erzielenden optischen Eigenschaften und der zu erzielenden Wickelbarkeit der Folie.

Typische Antiblockmittel sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Kaolin oder vernetzte Polystyrol- oder Arcrylat-Partikel.

Als Antiblockmittel können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z. B. als glykolische Dispersion während der Polykondensation oder über Masterbatche bei der Extrusion, zugegeben werden.

Die Zugabe von Antiblockmittel in der erfindungsgemäßen Konzentration in die Deckschicht (A) hat daneben den gewünschten positiven Effekt auf die Rauigkeit und den Reibungskoeffizienten der Deckschicht (A). Um das Verarbeitungsverhalten der Folie weiterhin zu verbessern, sollte die Konzentration des Antiblockmittels so gewählt werden, dass für die Rauigkeit und für den Reibungskoeffizienten folgende Werte erzielt werden:

Der Reibungskoeffizient (COF) der Seite (A) gegen sich selbst sollte kleiner/gleich 0,4 sein, andernfalls sind das Wickelverhalten und die Weiterverarbeitung der Folie unbefriedigend.

Die Rauigkeit der Deckschicht (A), ausgedrückt als $R_a$-Wert, sollte größer/gleich 40 nm und kleiner/gleich 150 nm sein. Kleinere $R_a$-Werte als 40 nm haben negative Auswirkungen auf das Wickel- und Verarbeitungsverhalten der Folie, größere $R_a$-Werte als 150 nm beeinträchtigen die optischen Eigenschaften (Glanz) der Folie.

Besonders bevorzugt enthalten die Basisschicht und die Deckschichten A und C als alleiniges weißfärbendes Pigment Bariumsulfat, dessen Konzentration in allen Schichten identisch ist. Als Antiblockmittel in den Deckschichten werden bevorzugt ebenfalls jeweils identische Partikel, insbesondere Siliciumdioxid, verwendet.

Bei der erfindungsgemäßen Folie liegt die Dicke der Deckschicht (A) und/oder (C) im allgemeinen im Bereich von 0,4 $\mu$m bis 6,0 $\mu$m, bevorzugt im Bereich von 0,5 bis 5,0 $\mu$m und besonders bevorzugt im Bereich von 0,6 bis 4,0 $\mu$m.

Die Basisschicht (B) als auch die weiteren Schichten, z. B. (A) und (C), können zusätzlich übliche Additive wie z. B. Stabilisatoren enthalten. Sie werden üblicherweise dem Polymer oder der Polymermischung vor dem Aufschmelzen zugesetzt. Als Stabilisatoren werden beispielsweise Phosphorverbindungen wie Phosphorsäure oder Phosphorsäureester eingesetzt.

Die Dicke der Polyesterfolie nach der vorliegenden Erfindung kann innerhalb weiter Grenzen variieren. Sie beträgt bevorzugt 5 bis 500 $\mu$m, insbesondere 8 bis 400 $\mu$m und besonders bevorzugt 10 bis 300 $\mu$m, wobei die Basisschicht einen Anteil von bevorzugt 50 bis 95 % an der Gesamtdicke hat.

Erfindungsgemäß ist mindestens eine Folienoberfläche so haftvermittelnd behandelt, dass der Kontaktwinkel zu Wasser $\leq$ 64°, bevorzugt $\leq$ 62°, besonders bevorzugt $\leq$ 60°, ist.

Dies wird bevorzugt durch eine Corona- bzw. Flammbehandlung erreicht, die sich üblicherweise an die Thermofixierung der Folie anschließt. Ebenso kann die Behandlung an anderen Stellen im Folienprozess, beispielsweise nach der Längsstreckung, erfolgen. Alternativ oder zusätzlich zu der oben beschriebenen Oberflächenbehandlung ist die Folie auf einer (oder beiden) Oberfläche(n) mit einer funktionalen Beschichtung beschichtet, so dass die Beschichtung auf der fertigen Folie eine Dicke von 5 bis 2000 nm, bevorzugt 20 bis 500, insbesondere 30 bis 200 nm, aufweist. Die Beschichtung wird bevorzugt in-line aufgebracht, d. h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtung äußerst homogen in Schichtdicken bis 200 nm auftragen lassen. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion, beispielsweise wird die Folie dadurch siegelfähig, bedruckbar, metallisierbar, sterilisierbar, antistatisch, oder verbessern z. B. die Aromabarriere oder ermöglichen die Haftung zu Materialien, die ansonsten nicht auf der Folienoberfläche haften würden. Beispiele für Stoffe/Zusammensetzungen, die zusätzliche Funktionalität verleihen sind: Acrylate, wie sie beispielsweise beschrieben sind in der WO 94/13476, Ethylenvinylalkohole, PVDC, Wasserglas ($Na_2SiO_4$), hydrophilische Polyester (5-Na-sulfoisophthalsäurehaltiger PET/IPA-Polyester wie sie beispielsweise beschrieben sind in der EP-A-0 144 878, US-A-4,252,885 oder EP-A-0 296 620), Polyvinylacetate wie sie beispielsweise beschrieben sind in der WO 94/13481, Polyurethane, Alkali- oder Erdalkalisalze von $C_{10}$-$C_{18}$-Fettsäuren, Butadiencopolymere mit Acrylnitril oder Methylmethacrylat, Mathacrylsäure oder deren Ester.

Die genannten Stoffe/Zusammensetzungen werden als verdünnte Lösung, Emulsion oder Dispersion, vorzugsweise als wässrige Lösung, Emulsion oder Dispersion, auf eine oder beide Folienoberflächen aufgebracht und anschließend das Lösungsmittel verflüchtigt. Werden die Beschichtungen in-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von (α) Isophthalsäure, (β) einer aliphatischen Dicarbonsäure mit der Formel

$$HOOC(CH_2)_nCOOH,$$

wobei n im Bereich von 1 bis 11 liegt, (γ) einem Sulfomonomeren enthaltend eine Alkalimetallsulfonatgruppe an dem aromatischen Teil einer aromatischen Dicarbonsäure und (δ) wenigstens einem aliphatischen oder cycloaliphatischen Alkylenglykol mit 2 bis 11, bevorzugt 2 bis 8, besonders bevorzugt 2 bis 6 Kohlenstoffatomen hergestellt. Die insgesamt anwesenden Säureäquivalente sollen auf molarer Basis im wesentlichen den insgesamt anwesenden Glykoläquivalenten entsprechen.

Es hat sich gezeigt, dass die verhältnismäßigen Anteile der Komponenten (α), (β), (γ) und (δ), die zur Herstellung der bevorzugten Copolyesterbeschichtungen eingesetzt werden, entscheidend für das Erzielen einer beschichteten Folie mit zufriedenstellender Haftung sind. So sollte bevorzugt z. B. Isophthalsäure (Komponente α) zu mindestens etwa 65 Mol-% als Säurekomponente anwesend sein. Bevorzugt ist die Komponente (α) reine Isophthalsäure, die in einer Menge von etwa 70 bis 95 Mol-% anwesend ist. Für die Komponente (β) gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente (β) in der Zusammensetzung enthalten ist. Das die Komponente (γ) der bevorzugten Copolyesterbeschichtung bildende Monomere sollte bevorzugt in einer Menge von wenigstens 5 Mol-% in diesem System enthalten sein, damit die Grundierung mit Wasser dispergierbar wird. Besonders bevorzugt liegt die Menge an Monomerem der Komponente (γ) bei 6,5 bis 12 Mol-%. Die Glykolkomponente (δ) ist in ungefähr stöchiometrischer Menge anwesend.

In einer weiteren bevorzugten Ausführungsform der Erfindung wird eine Acrylatbeschichtung zur Erzielung der besseren Haftung verwendet. Die bevorzugt verwendeten Acrylcopolymeren bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Vernetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C- Atome enthält, wie z. B. die Methyl-, Ethyl-, *n*-Propyl-, Isopropyl-, *n*-Butyl-, Isobutyl-, tertiär-Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterfolie und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat- Comonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden wie z. B. N-Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N-Methylolmethacrylamid bevorzugt, und zwar in erster Linie deswegen, weil Copolymerketten, die eines dieser Monomere enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Hamstoff-Formaldehyd-Kondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Antiblockmittel wie z. B. kolloidales $SiO_2$ usw.. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden:

  1. Eine Mischung aus einem aromatischen Copolyester (I-1) mit einer funktionellen Gruppe, die diesen wasserdispergierbar macht, und einem Polyvinylalkohol (II-1);
  2. eine Mischung aus einem aromatischen Copolyester (I-2) mit einer funktionellen Gruppe, die diesen wasserdispergierbar macht, und einem Polyglycerolpolyglycidylether (II-2); oder
  3. eine Mischung aus einem wässrigen Polyurethan (I-3) und einem Polyvinylalkohol (II-3).

Die aromatischen Copolyester (I-1 und I-2) werden aus aromatischen Dicarbonsäuren, wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9 % betragen. Als Polyglycerolpolyglycidylether (II-2) werden Reaktionsprodukte von Glycerin und Epichlorhydrin mit Molekulargewichten zwischen ca. 250 und 1200 g/Mol verwendet. Das wässrige Polyurethan (I-3) wird aus einem Polyol, wie z. B. Polyester mit Glykol-Endgruppen, Polyoxyethylenglykol, Polyoxypropylenglykol, Polyoxytetramethylenglykol oder acrylische Polylole, und einem Diisocyanat, wie zum Beispiel Xyloldiisocyanat, Hexamethylendiisocyanat, 4,4'-Dicyclohexylmethandiisocyanat, Toluidindiisocyanat, Phenylendiisocyanat, 4,4'-Diphenylmethandiisocyanat und 1,5-Naphthalindiisocyanat hergestellt.

In einer weiteren bevorzugten Ausführungsform der Erfindung besteht die haftvermittelnde Schicht aus einem aminofunktionellen Silan, welches die Folie dampfsterilisierfest macht (das Laminat z.B. aus Folie, Beschichtung, Kleber oder aufgebrachten metallischen und keramischen Schichten delaminiert dann nicht) und darüber hinaus für die direkte Extrusionsbeschichtung mit Polymeren aufnahmebereit macht.

Das aminofunktionelle Silan, das für die haftvermittelnde Schicht im Sinne der Erfindung genutzt wird, wird durch folgende Formel in seiner nicht-hydrolysierten Form beschrieben:

$$(R^1)_a Si(R^2)_b (R^3)_c,$$

wobei $R^1$ eine funktionelle Gruppe mit mindestens einer primären Aminogruppe ist. $R^2$ ist eine hydrolysierbare Gruppe wie z. B. eine kleinere (1-5 C-Atome) Alkoxygruppe, eine Acetoxy-Gruppe oder ein Halogenid. $R^3$ ist unreaktiv, nicht hydrolysierbar und ist z. B. eine kleine (1-5 C-Atome) Alkyl- oder Phenyl-Gruppe; (a) ist größer oder gleich 1; (b) ist größer oder gleich 1; (c) ist größer oder gleich 0; mit a+b+c = 4.

Generell wird das aminofunktionelle Silan in Wasser hydrolysiert und auf eine oder mehrere Oberflächen der orientierten Polyesterfolie mit konventionellen Methoden wie Sprüh- oder Rollenbeschichtung aufgebracht. Wenn die Silanbeschichtung einmal getrocknet ist, ist die so grundierte Polyesterfolie dampfsterilisierbar und aufnahmefähig für die direkte Extrusion mit anderen Polymeren. Die Extrusionsbeschichtung kann mit einem konventionellen Prozess durchgeführt werden.

Beispiele von Aminosilanen, die zu dieser Formel passen, sind N-2-(Aminoethyl)-3-aminopropyltrimethoxysilan, 3-Aminopropyltrimethoxysilan, 4-Aminobutyltriethoxysilan, 4-Aminobutyldimethylmethoxysilan, und p-Aminophenyltrimethoxysilan. Das bevorzugte Silan ist N-2-(Aminoethyl)-3-aminopropyltrimethoxysilan mit der folgenden Formel:

$$H_2N(CH_2)_2 NH(CH_2)_3 Si(OCH_3)_3,$$

Das hydrolysierte Aminosilan kann prinzipiell zu jedem möglichen Zeitpunkt bei der Herstellung der Folie aufgetragen werden, d. h. vor oder während des Streckprozesses, es kann auch auf die fertige Folie (z. B.) vor der Aufrollung aufgetragen werden.

Silane sind nach der Hydrolyse wasserlöslich oder können in Wasser dispergiert werden, wobei aminofunktionelle Silane besonders gut wasserlöslich sind. Es wurde herausgefunden, dass Aminosilane eine gute Haftung zu Farben, Klebern, Primern und metallischen und keramischen Schichten auch nach der Dampfsterilisation aufweisen und ebenso eine gute Haftung zu extrusionsbeschichteten Polymeren aufweisen, ohne dass die Polyesterfolie eine zusätzliche haftvermittelnde Schicht aufweist oder einer Corona-Behandlung unterzogen wurde. Der Verschnitt von Polyesterfolie mit Aminosilan-Beschichtung kann regeneriert werden.

Die haftvermittelnde Schicht wird durch die Mischung von Aminosilan mit Wasser in einem Bereich von 0,2 bis 6 Gew.-% hergestellt. Optional kann eine schwache Säure wie z. B. Essigsäure zugefügt werden, um die Hydrolyse zu fördern. Zumindest eine der hydrolysierbaren Gruppen des Silans wird zu einer Silanol-Gruppe (SiOH) hydrolysiert. Es wird angenommen, dass das Hydrolyseprodukt des Aminosilans eine partiell hydrolysierte cyclische Struktur hat, wobei die Amino-Gruppe wahrscheinlich ionische Bindungen zum Silicium-Teil des Moleküls bildet. Folglich kann sich der Terminus "hydrolysiert", der hier verwendet wird, auch auf diese teilweise hydrolysierten Strukturen beziehen.

Die oben beschriebene erfindungsgemäße Beschichtung ist ausführlich in der EP-B-0 359 017 (Seiten 3 bis 5) dargestellt, auf die an dieser Stelle ausdrücklich Bezug genommen wird. Diese Schrift gibt auch Auskunft über weitere spezifische Kombinationen solcher hydrolisierbaren Aminosilane, auf deren Wiedergabe hier verzichtet wird.

Die bevorzugten Copolyester-, Acrylat-, Silan- und hydrophilen Beschichtungen können weiterhin andere bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw..

**Herstellungsverfahren**

Gegenstand der vorliegenden Erfindung ist auch ein Verfahren zur Herstellung der erfindungsgemäßen Folien. Es umfasst .

- das Herstellen einer mehrschichtigen Folie aus einer Basisschicht (B) und Deckschicht(en) (A) (und ggf. C) durch Coextrusion und Ausformen der Schmelzen zu einem flachen Schmelzefilm,
- biaxiales Strecken der Folie,
- Beschichten der Folie mit der wasserlöslichen und haftvermittelnden Schicht (vorzugsweise zwischen dem ersten und dem zweiten Streckschritt) und
- Thermofixieren der gestreckten, beschichteten Folie.

Zunächst wird das Polymer bzw. die Polymermischung der einzelnen Schichten in jeweils einem Extruder komprimiert und verflüssigt. Die Schmelzen werden gleichzeitig übereinander durch eine Breitschlitzdüse gepresst und die ausgepresste mehrschichtige Folie auf einer oder mehreren Abzugswalzen abgezogen, wobei sie abkühlt und sich verfestigt.

Die biaxiale Verstreckung wird im allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe von zwei entsprechend dem angestrebten Streckverhältnis verschieden schnell laufender Walzen durchführen. Zum Querverstrecken benutzt man allgemein einen entsprechenden Kluppenrahmen.

Die Temperatur, bei der die biaxiale Verstreckung, insbesondere von PET, im allgemeinen durchgeführt werden kann, kann in einem relativ großen Bereich variieren und richtet sich nach den gewünschten Eigenschaften der Folie. Die Längsstreckung wird im allgemeinen bei ca. 80 bis 140 °C und die Querstreckung bei ca. 80 bis 150 °C durchgeführt. Das Längsstreckverhältnis $\lambda_{MD}$ liegt bevorzugt im Bereich von 2,0:1,0 bis 5,0:1,0. Das Querstreckverhältnis $\lambda_{TD}$ liegt im allgemeinen im Bereich von 2,5:1 bis 5,0:1. Bevorzugt vor der Querstreckung werden erfindungsgemäß eine oder beide Oberflächen der Folie nach den bekannten Verfahren in-line beschichtet. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Bevorzugt werden nach der biaxialen Streckung eine oder beide Oberflächen der Folie nach einer der bekannten Methoden zusätzlich corona- oder flammbehandelt. Die Behandlungsintensität liegt im allgemeinen über 50 mN/m$^2$.

Die erfindungsgemäße Folie zeigt ein sehr gutes Handling, sehr gute Wickeleigenschaften und ein sehr gutes Verarbeitungsverhalten. Die erfindungsgemäße Folie eignet sich als Verpackungsmaterial für Nahrungs- und Genussmittel, als photographischer Schichtträger, als Rundumetikett oder für medizinische Anwendungen.

Die Folie nach der vorliegenden Erfindung weist daneben hervorragende optische Eigenschaften auf, zeigt hervorragende Weiterverarbeitungseigenschaften und eine ausgezeichnete Rollenaufmachung. Die Folie eignet sich auf Grund ihres sehr guten Handlings und ihrer sehr guten Verarbeitungseigenschaften insbesondere für die Verarbeitung auf schnelllaufenden Maschinen. Außerdem besitzt die Folie einen hervorragenden Weißgrad, der der Folie zusätzlich ein sehr attraktives, werbewirksames Aussehen verleiht.

Bei der Herstellung der Folie ist gewährgeleistet, dass das Regenerat, das z. B. als Verschnitt bei der Folienherstellung anfällt, in einer Konzentration von ca. 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten bevorzugten Folieneigenschaften noch einmal zusammen.

**Tabelle 1**

| | zweckmäßiger Bereich | Bevorzugt | Besonders bevorzugt | Einheit | Messmethode |
|---|---|---|---|---|---|
| **Basisschicht B** | | | | | |
| Konzentration an Bariumsulfat (Weißpigment) 5,0 bis 25,0 | | 10,0 bis 25,0 | 15,0 bis 25,0 | Gew.-% | intern |
| **Deckschicht A** | | | | | |
| Konzentration an Bariumsulfat (Weißpigment) | 5,0 bis 25,0 | 10.0 bis 25,0 | 15,0 bis 25,0 | Gew.-% | intern |
| Füllstoffkonzentraration des Antiblockmittels | 0,01 bis 4,0 | 0,05 bis 3,5 | 0,1 bis 3,0 | Gew.-%, | intern |
| Partikeldurchmesser $(d_{50})$ des Antiblockmittels | 2,0 bis 8,0 | 2,1 bis 7,0 | 2,2 bis 6,0 | $\mu m$ | intern |
| Mittlere Rauigkeit $R_a$ der A-Seite | 40 bis 150 | 43 bis 140 | 46 bis 130 | nm | DIN4762 |
| Reibungswert COF A-Seite gegen A-Seite | kleiner/gleich 0,40 | kleiner/gleich 0,35 | kleiner/gleich 0,30 | | DIN53375 |
| Dicke der Deckschicht A | 0,4 bis 6,0 | 0,5 bis 5,0 | 0,6 bis 4,0 | $\mu m$ | |
| **Eigenschaften der Folie** | | | | | |
| Dicke der Folie | 5 bis 500 | 8 bis 400 | 10 bis 300 | $\mu m$ | |
| Weißgrad der Folie nach Berger | > 70 | > 85 | > 100 | | s. Beschreibung |
| Transparenz der Folie | < 40 | < 35 | < 30 | % | ASTM-D 1003-00 |
| Glanz der Deckschicht A bei 20°-Messwinkel | < 40 | < 35 | < 30 | | DIN 67530 |
| Kontaktwinkel von Wasser auf beschichteter Folienoberfläche | kleiner/gleich 64 | kleiner/gleich 62 | kleiner/gleich 60 | ° | s. Beschreibung |

Zur Charakterisierung der Rohstoffe und der Folien wurden die folgenden Messmethoden benutzt:

DIN = Deutsches Institut für Normung
ASTM = American Society for Testing and Materials

**Transparenz**

Die Transparenz wird in Anlehnung an ASTM-D 1003-00 gemessen.

**Rauigkeit**

Der arithmetische Mittenrauwert $R_a$ wurde nach DIN 4762 bestimmt.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO der Firma Zeiss, Oberkochem (DE), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hans Loos, Farbmessung, Verlag Beruf und Schule, Itzehoe (1989), beschrieben.

**SV-Wert (Standard Viskosität)**

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV\ [\eta] = 6{,}907 \cdot 10^{-4}\ SV\ (DCE) + 0{,}063096\ [dl/g]$$

**Reibung**

Die Reibung wurde nach DIN 53375 bestimmt. Die Gleitreibungszahl wurde 14 Tage nach der Produktion gemessen.

**Glanz**

Der Glanz wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos.

**Messung des mittleren Durchmessers $d_{50}$**

Die Bestimmung des mittleren Durchmessers $d_{50}$ wurde mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

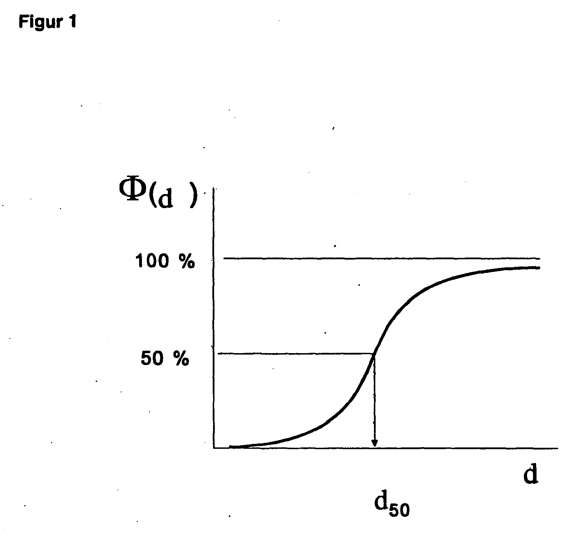

Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschen $d_{50}$-Wert. Wie dies zu verstehen ist, wird in Figur 1 näher verdeutlicht.

**Wickelverhalten der Folie**

Das Wickelverhalten der Folie wurde visuell beim Aufwickeln der Maschinenrolle direkt nach der biaxialen Orientierung beurteilt.

+:  Die Maschinenrolle ist einwandfrei gewickelt. Es wurden keine Falten, kein Verschießen der Folienbahn und keine Blockpickel infolge von Verblockung von Folienlagen festgestellt.

-: Die Maschinenrolle ist fehlerbehaftet gewickelt. Es wurde mindestens einer der folgenden Fehler beobachtet: Falten, Verschießen der Folienbahn, Blockpickel infolge von Verblockung von Folienlagen.

### Rollenaufmachung

Die Rollenaufmachung wurde visuell nach der Konfektionierung der Maschinerolle zu schmaleren Kundenrollen beurteilt.

+: Die Kundenrolle ist einwandfrei gewickelt. Es wurden keine Falten, keine Rillen in der Folienbahn und keine Blockpickel infolge von Verblockung von Folienlagen festgestellt.

-: Die Kundenrolle ist fehlerbehaftet gewickelt. Es wurde mindestens einer der folgenden Fehler beobachtet: Falten, Rillen in der Folienbahn, Blockpickel infolge von Verblockung von Folienlagen.

### Verarbeitungsverhalten der Folie

Das Verarbeitungsverhalten der Folie wurde visuell bei der Herstellung von Deckeln beurteilt.

+: Das Verarbeitungsverhalten der Folie ist einwandfrei. Es wurde z.B. kein Curling, kein Hängenbleiben des Deckels im Siegelwerkzeug etc. festgestellt.

-: Das Verarbeitungsverhalten der Folie ist fehlerbehaftet. Es wurde mindestens einer der folgenden Fehler beobachtet: Curling, Hängenbleiben des Deckels im Siegelwerkzeug.

### Kontaktwinkel mit Wasser

Die Polarität der Oberfläche wurde durch eine Randwinkelmessung von destilliertem Wasser bestimmt. Die Messung fand bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokulars der Kontaktwinkel abgelesen wird (Messung des Fortschreitwinkels). Aus 5 Messungen wird der Mittelwert gebildet.

Im folgenden wird die Erfindung anhand von Beispielen näher erläutert.

### Beispiel 1

Chips aus Polyethylenterephthalat enthaltend Bariumsulfat als Weißpigment wurden getrocknet und dem Extruder für die Basisschicht (B) zugeführt. Ebenfalls wurden Chips aus Polyethylenterephthalat enthaltend Bariumsulfat als Weißpigment und ein Antiblockmittel getrocknet und dem Extruder für die beiden (gleichen) Deckschichten (A) zugeführt.

Dann wurde durch Coextrusion und anschließende stufenweise Orientierung in Längs- und Querrichtung, Fixierung und anschließende Coronabehandlung (2 kW/m) von einer der beiden Deckschichten eine weiße, dreischichtige Folie mit ABA-Aufbau und einer Gesamtdicke von 60 $\mu$m hergestellt. Die Dicke der beiden Deckschichten betrug jeweils 2 $\mu$m.

Basisschicht (B):

100 Gew.-% Polyethylenterephthalat mit 20 Gew.-% Bariumsulfat (Blanc fixe XR-HX, Sachtleben Chemie) als Weißpigment und einem SV-Wert von 800

Deckschicht (A), Mischung aus:

85 Gew.-% Polyethylenterephthalat mit 20 Gew.-% Bariumsulfat (Blanc fixe XR-HX, Sachtleben Chemie) als Weißpigment und einem SV-Wert von 800

15 Gew.-% Masterbatch aus 97,5 Gew.-% Polyethylenterephthalat (SV-Wert von 800) und 2,5 Gew.-% Sylobloc® 44 H (synthetisches $SiO_2$ der Fa. Grace, mittlerer Durchmesser = 2,5 $\mu$m)

Die Herstellungsbedingungen in den einzelnen Verfahrensschritten waren:

| Extrusion | Temperaturen | A-Schicht: | 280 °C |
| | | B-Schicht: | 280 °C |
| | | A-Schicht: | 280 °C |
| | Temperatur der Abzugswalze | | 20 °C |
| Längsstreckung | Temperatur | | 70-120 °C |
| | Längsstreckverhältnis | | 3,2 |
| Querstreckung | Temperatur | | 80-135 °C |
| | Querstreckverhältnis | | 3,8 |
| Fixierung | Temperatur | | 230 °C |
| | Dauer | | 3 s |

Es wurde eine Folie mit einer sehr guten Optik, mit sehr gutem Wickelverhalten, einer sehr guten Wickelqualität und einem sehr guten Verarbeitungsverhalten erhalten. Die Folie hatte die gewünschte verbesserte Haftung, der Kontaktwinkel zu Wasser betrug 63,7°.

**Beispiel 2**

Die Folie wurde wie in Beispiel 1 hergestellt, jedoch ohne Coronabehandlung nach dem biaxialen Strecken. Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid wurde nach dem folgenden Verfahren als Haftvermittlerbeschichtung auf die C-Schicht der Polyesterfolie aufgebracht:
Die längsgestreckte Folie wurde coronabehandelt (8 kW/m) und danach durch Reversgravurbeschichtung auf der C-Schicht mit dem oben beschriebenen Latex beschichtet.
Die biaxial gestreckte Folie wurde bei 230 °C thermofixiert. Das Trockengewicht der Beschichtung betrug ca. 0,035 g/m bei einer Beschichtungsdicke von etwa 40 nm.
Die Eigenschaften der Folie sind wie in Beispiel 1. Der Kontaktwinkel zu Wasser betrug 63,8°. Die Folie wurde auf ihre reprographische Haftung geprüft und ergab eine gute Haftung.

**Beispiel 3**

Die Folie wurde wie in Beispiel 1 hergestellt. Eine wässrige Dispersion mit 6 Gew.-% Copolyester, bestehend aus 95 Mol-% Isophthalat, 5 Mol-% Na-5-Sulfoisophtalat und 100 Mol-% Ethylenglykol, und 0,56 Gew.-% kolloidalem $SiO_2$ wurde nach dem folgenden Verfahren als Beschichtung auf eine Polyesterfolie aufgebracht:

Die längsgestreckte Folie wurde durch Reversgravurbeschichtung auf der C-Schicht mit der oben beschriebenen Copolyesterdispersion beschichtet.

Die biaxial gestreckte Folie wurde bei 230 °C thermofixiert. Das Trockengewicht der Beschichtung betrug ca. 0,030 g/m bei einer Beschichtungsdicke von etwa 35 nm. Der Kontaktwinkel zu Wasser betrug 57°.

Zwei Proben der so hergestellten, einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden etwa 500 ANGSTROM Aluminium sowohl auf die unbeschichtete Seite als auch auf die beschichtete Probe aufgedampft.
Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und in etwa dem gleichen Druck leicht über die Metalloberfläche gerieben. Das "Abriebverhalten" der beschichteten Seite der Folie wurde als gut bewertet.

Beispiel 4

Die Folie wurde wie in Beispiel 1 hergestellt, jedoch ohne Coronabehandlung nach dem biaxialen Strecken. Eine wässrige Dispersion mit 7 Gew.-% Feststoffgehalt, bestehend aus 50 Gew.-% des aromatischen Copolyesters A1 (Copolyester enthaltend 90 Mol-% Terephthalat, 10 Mol-% 5-Natriumsulfoisophtalat, 80 Mol-% Ethylenglykol und 20 Mol-% Diethylenglykol), 45 Gew.-% des wasserdispergierbaren Polymers B2 (Polyvinylalkohol mit einem Verseifungsgrad von 88 % und einem Polymerisationsgrad von 1.700) und 5 Gew.-% an inerten Partikeln D1 (kolloidales $SiO_2$ mit einem Partikeldurchmesser von 0,05 $\mu$m) wurde nach dem folgenden Verfahren als Beschichtung auf eine Polyesterfolie aufgebracht:

Die längsgestreckte Folie wurde durch Reversgravurbeschichtung mit der oben beschriebenen Copolyesterdispersion beschichtet. Das Trockengewicht der Beschichtung betrug ca. 0,040 g/m bei einer Beschichtungsdicke von etwa 0,05 $\mu$m. Der Kontaktwinkel zu Wasser war 49,8°:

Zur Beurteilung der Haftvermittlerwirkung der Beschichtung wurde eine wässrige Polyvinylacetal-Lösung (S-Lec KX-1, hergestellt von Sekisui Chemical Co., Ltd.; im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 $\mu$m aufgebracht. Die beschichtete Folie wurde unverzüglich zum Trocknen bei 100 °C für 4 Minuten in einen Ofen gestellt. Ein schwarzes Quadrat (Fläche: 12 x 12 cm) wurde mit einem Ink-jet-Drucker (BJC-600J, Canon Inc.) auf die Oberfläche der getrockneten KX-1 Beschichtung gedruckt und für 12 Stunden bei 23 °C und 50 % relativer Luftfeuchtigkeit unter Luft getrocknet. Ein Klebeband (Cello-tape, Nichiban Inc. Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

**Vergleichsbeispiel 1**

Eine Folie wie aus Beispiel 1 wurde hergestellt, jedoch ohne Coronabehandlung. Der Kontaktwinkel zu Wasser betrug 65,5°, und die Haftung zu Metall war schlecht.

Die Ergebnisse sind in Tabelle 2 zusammengefasst.

**Tabelle 2**

| | Weißgrad der Folie | Transparenz | Glanz Messwinkel 20° | | Mittlere Rauigkeit $R_a$ der A-Seite | Reibungswert COF A-Seite gegen A-Seite | Kontaktwinkel | Wickelverhalten | Rollenaufmachung | Verarbeitungsverhalten |
|---|---|---|---|---|---|---|---|---|---|---|
| | | | A-Seite | C-Seite | | | | | | |
| | | [%] | | | [nm] | | [°] | | | |
| **Beispiel** | | | | | | | | | | |
| **1** | 110 | 23 | 18 | 18 | 56 | 0,31 | 63,7 | + | + | + |
| **2** | 110 | 23 18 | | 18 | 56 | 0,31 | 63,8 | + | + | + |
| **3** | 110 | 23 | 18 | 18 | 56 | 0,31 | 57,0 | + | + | + |
| **4** | 110 | 23 | 18 | 18 | 56 | 0,31 | 49,8 | + | + | + |
| **y-Beispiel** | | | | | | | | | | |
| **1** | 110 | 23 | 18 | 18 | 56 | 0,31 | 65,5 | + | + | + |

**EP 1 859 933 B1**

**Patentansprüche**

1. Weiße, coextrudierte und biaxial orientierte Polyesterfolie, welche eine Basisschicht (B) und mindestens eine Deckschicht (A) aufweist, wobei

   a) die Basisschicht (B) als alleiniges weißfärbendes Pigment Bariumsulfat in einer Konzentration von 5,0 bis 25,0 Gew.-% enthält (bezogen auf das Gewicht der Basisschicht (B)) und
   b) die Deckschicht (A) als alleiniges weißfärbendes Pigment Bariumsulfat in einer Konzentration von 5,0 bis 25,0 Gew.-% enthält und zusätzlich 0,01 bis 4 Gew.-% eines Antiblockmittels mit einem mittleren Durchmesser ($d_{50}$-Wert) im Bereich von 2,0 bis 8,0 $\mu$m aufweist (Gew.-% Angaben bezogen auf das Gewicht der Deckschicht (A)) und
   c) zumindest eine der beiden Folienoberflächen haftvermittelnd ausgerüstet ist.

2. Polyesterfolie nach Anspruch 1, **dadurch gekennzeichnet, dass** das weißfärbende Pigment ein gefälltes Bariumsulfat ist.

3. Polyesterfolie nach Anspruch 1 oder 2, **dadurch gekennzeichnet, dass** das Antiblockmittel in der Deckschicht (A) ein nicht weißfärbendes Pigment ist.

4. Polyesterfolie nach einem oder mehreren der Ansprüche 1 bis 3, **dadurch gekennzeichnet, dass** das Antiblockmittel in der Deckschicht (A) Siliciumdioxid ist.

5. Polyesterfolie nach einem oder mehreren der Ansprüche 1 bis 4, **dadurch gekennzeichnet, dass** die Basisschicht (B) zu mindestens 80 Gew.-% aus einem thermoplastischen Polyester besteht.

6. Polyesterfolie nach einem oder mehreren der Ansprüche 1 bis 5, **dadurch gekennzeichnet, dass** der thermoplastische Polyester der Basisschicht (B) Einheiten aus Ethylenglykol und Terephthalsäure und/oder Einheiten aus Ethylenglykol und Naphthalin-2,6-dicarbonsäure aufweist.

7. Polyesterfolie nach einem oder mehreren der Ansprüche 1 bis 6, **dadurch gekennzeichnet, dass** der thermoplastische Polyester der Basisschicht (B) Polyethylenterephthalat ist.

8. Polyesterfolie nach einem oder mehreren der Ansprüche 1 bis 7, **dadurch gekennzeichnet, dass** der thermoplastische Polyester der Basisschicht (B) und der thermoplastische Polyester der Deckschicht (A) identisch sind.

9. Polyesterfolie nach einem oder mehreren der Ansprüche 1 bis 8, **dadurch gekennzeichnet, dass** die Polyesterfolie einen ABC-Schichtaufbau hat, wobei die Deckschichten (A) und (C) gleich oder verschieden sind.

10. Polyesterfolie nach einem oder mehreren der Ansprüche 1 bis 9, **dadurch gekennzeichnet, dass** die Polyesterfolie einen ABA-Schichtaufbau hat.

11. Polyesterfolie nach einem oder mehreren der Ansprüche 1 bis 10, **dadurch gekennzeichnet, dass** die Deckschicht (A) der Folie eine mittlere Rauigkeit von 40 bis 150 nm aufweist.

12. Polyesterfolie nach einem oder mehreren der Ansprüche 1 bis 11, **dadurch gekennzeichnet, dass** der Reibungswert der Deckschicht (A) gegen die Deckschicht (A) kleiner/gleich 0,4 ist.

13. Polyesterfolie nach einem oder mehreren der Ansprüche 1 bis 12, **dadurch gekennzeichnet, dass** der Weißgrad der Folie nach Berger größer als 70 ist.

14. Polyesterfolie nach einem oder mehreren der Ansprüche 1 bis 13, **dadurch gekennzeichnet, dass** die haftvermittelnd ausgerüstete Oberfläche der Folie mit Corona behandelt wurde.

15. Polyesterfolie nach einem oder mehreren der Ansprüche 1 bis 14, **dadurch gekennzeichnet, dass** die haftvermittelnd ausgerüstete Folienoberfläche eine Haftvermittlerschicht trägt.

16. Polyesterfolie nach Anspruch 15, **dadurch gekennzeichnet, dass** die Haftvermittlerschicht einen Copolyester enthält.

**15**

**17.** Polyesterfolie nach Anspruch 15, **dadurch gekennzeichnet, dass** die Haftvermittlerschicht eine Acrylat-Beschichtung ist.

**18.** Polyesterfolie nach Anspruch 15, **dadurch gekennzeichnet, dass** die Haftvermittlerschicht eine hydrophile Beschichtung ist.

**19.** Polyesterfolie nach einem oder mehreren der Ansprüchen 1 bis 18, **dadurch gekennzeichnet, dass** die haftvermittelnd ausgerüstete Folienoberfläche einen Kontaktwinkel zu Wasser von kleiner/gleich 64° aufweist.

**20.** Verfahren zur Herstellung einer Polyesterfolie nach einem oder mehreren der Ansprüche 1 bis 19 umfassend die Schritte

a) Herstellen einer mehrschichtigen Folie durch Coextrusion und Ausformen der Schmelzen zu flachen Schmelzefilmen,
b) biaxiales Strecken der Folie,
c) Behandeln mindestens einer Folienoberfläche mit Corona oder Flamme und/oder Beschichten der Folie mit einer wasserlöslichen, haftvermittelnden Beschichtung vor, während oder nach dem biaxialen Strecken der Folie und
d) Thermofixieren der gestreckten Folie.

**21.** Verwendung einer Polyesterfolie nach einem oder mehreren der Ansprüche 1 bis 19 als Verpackungsmaterial für Nahrungs- und Genussmittel, als Etikett, als Karte, für die Medizintechnik.

**Claims**

**1.** A white, coextruded, and biaxially oriented polyester film, which has a base layer (B) and at least one outer layer (A), where

a) the base layer (B) comprises, as sole whitening pigment, barium sulfate at a concentration of from 5.0 to 25.0 % by weight (based on the weight of the base layer (B)), and
b) the outer layer (A) comprises, as sole whitening pigment, barium sulfate at a concentration of from 5.0 to 25.0 % by weight, and also from 0.01 to 4 % by weight of an antiblocking agent whose median diameter ($d_{50}$ value) is in the range from 2.0 to 8.0 $\mu$m (% by weight data based on the weight of the outer layer (A)), and
c) at least one of the two surfaces of the film has been rendered adhesion-promoting.

**2.** The polyester film as claimed in claim 1, wherein the whitening pigment is a precipitated barium sulfate.

**3.** The polyester film as claimed in claim 1 or 2, wherein the antiblocking agent in the outer layer (A) is a non-whitening pigment.

**4.** The polyester film as claimed in one or more of claims 1 to 3, wherein the antiblocking agent in the outer layer (A) is silicon dioxide.

**5.** The polyester film as claimed in one or more of claims 1 to 4, wherein the base layer (B) is composed of at least 80 % by weight of a thermoplastic polyester.

**6.** The polyester film as claimed in one or more of claims 1 to 5, wherein the thermoplastic polyester of the base layer (B) has units composed of ethylene glycol and terephthalic acid and/or units composed of ethylene glycol and naphthalene-2,6-dicarboxylic acid.

**7.** The polyester film as claimed in one or more of claims 1 to 6, wherein the thermoplastic polyester of the base layer (B) is polyethylene terephthalate.

**8.** The polyester film as claimed in one or more of claims 1 to 7, wherein the thermoplastic polyester of the base layer (B) and the thermoplastic polyester of the outer layer (A) are identical.

**9.** The polyester film as claimed in one or more of claims 1 to 8, which has an ABC layer structure, where the outer layers (A) and (C) are identical or different.

10. The polyester film as claimed in one or more of claims 1 to 9, which has an ABA layer structure.

11. The polyester film as claimed in one or more of claims 1 to 10, wherein the average roughness of the outer layer (A) of the film is from 40 to 150 nm.

12. The polyester film as claimed in one or more of claims 1 to 11, wherein the coefficient of friction of the outer layer (A) with respect to the outer layer (A) is smaller than or equal to 0.4.

13. The polyester film as claimed in one or more of claims 1 to 12, whose Berger whiteness is greater than 70.

14. The polyester film as claimed in one or more of claims 1 to 13, wherein corona treatment has been used on that surface of the film which has been rendered adhesion-promoting.

15. The polyester film as claimed in one or more of claims 1 to 14, wherein an adhesion-promoter layer is present on that surface of the film which has been rendered adhesion-promoting.

16. The polyester film as claimed in claim 15, wherein the adhesion-promoter layer comprises a copolyester.

17. The polyester film as claimed in claim 15, wherein the adhesion-promoter layer is an acrylate coating.

18. The polyester film as claimed in claim 15, wherein the adhesion-promoter layer is a hydrophilic coating.

19. The polyester film as claimed in one or more of claims 1 to 18, wherein the contact angle with respect to water of that surface of the film which has been rendered adhesion-promoting is smaller than or equal to 64 °.

20. A process for production of a polyester film as claimed in one or more of claims 1 to 19, encompassing the steps of

   a) production of a multilayer film via coextrusion and shaping of the melts to give flat melt films,
   b) biaxial stretching of the film,
   c) use of corona or flame to treat at least one surface of the film, and/or coating of the film with a water-soluble, adhesion-promoting coating, prior to, during, or after the biaxial stretching of the film, and
   d) heat-setting of the stretched film.

21. The use of a polyester film as claimed in one or more of claims 1 to 19, as packaging material for foods and for other consumable items, as a label, as a card, for medical technology.

**Revendications**

1. Feuille polyester blanche, co-extrudée et orientée de manière biaxiale, qui présente une couche de base (B) et au moins une couche superficielle (A) ; dans laquelle

   a) la couche de base (B) contient du sulfate de baryum en une concentration de 5,0 à 25,0 % en poids (par rapport au poids de la couche de base (B)) en tant que pigment colorant blanc unique et
   b) la couche superficielle (A) contient du sulfate de baryum en une concentration de 5,0 à 25,0 % en poids en tant que pigment colorant blanc unique et présente de manière supplémentaire 0,01 à 4 % en poids d'un agent anti-adhérent avec un diamètre moyen (valeur $d_{50}$) dans la plage de 2,0 à 8,0 $\mu$m (données en % en poids par rapport au poids de la couche superficielle (A)) et
   c) au moins une des deux surfaces de feuille est apprêtée de manière à favoriser l'adhérence.

2. Feuille polyester selon la revendication 1, **caractérisée en ce que** le pigment colorant blanc est un sulfate de baryum précipité.

3. Feuille polyester selon la revendication 1 ou 2, **caractérisée en ce que** l'agent anti-adhérent présent dans la couche superficielle (A) est un pigment qui ne colore pas en blanc.

**4.** Feuille polyester selon l'une quelconque des revendications 1 à 3, **caractérisée en ce que** l'agent anti-adhérent présent dans la couche superficielle (A) est du dioxyde de silicium.

**5.** Feuille polyester selon l'une quelconque des revendications 1 à 4, **caractérisée en ce que** la couche de base (B) est constituée pour au moins 80 % en poids d'un polyester thermoplastique.

**6.** Feuille polyester selon l'une quelconque des revendications 1 à 5, **caractérisée en ce que** le polyester thermoplastique de la couche de base (B) présente des unités constituées d'éthylèneglycol et d'acide téréphtalique et/ou des unités constituées d'éthylèneglycol et d'acide naphtaline-2,6-dicarboxylique.

**7.** Feuille polyester selon l'une quelconque des revendications 1 à 6, **caractérisée en ce que** le polyester thermoplastique de la couche de base (B) est du polyéthylènetéréphtalate.

**8.** Feuille polyester selon l'une quelconque des revendications 1 à 7, **caractérisée en ce que** le polyester thermoplastique de la couche de base (B) et le polyester thermoplastique de la couche superficielle (A) sont identiques.

**9.** Feuille polyester selon l'une quelconque des revendications 1 à 8, **caractérisée en ce que** la feuille polyester possède une structure de couche ABC, dans laquelle les couches superficielles (A) et (C) sont identiques ou différentes.

**10.** Feuille polyester selon l'une quelconque des revendications 1 à 9, **caractérisée en ce que** la feuille polyester possède une structure de couche ABA.

**11.** Feuille polyester selon l'une quelconque des revendications 1 à 10, **caractérisée en ce que** la couche superficielle (A) de la feuille présente une rugosité moyenne de 40 à 150 nm.

**12.** Feuille polyester selon l'une quelconque des revendications 1 à 11, **caractérisée en ce que** la valeur d'abrasion de la couche superficielle (A) contre la couche superficielle (A) est inférieure ou égale à 0,4.

**13.** Feuille polyester selon l'une quelconque des revendications 1 à 12, **caractérisée en ce que** le degré de blanc de la feuille est supérieur à 70 selon Berger.

**14.** Feuille polyester selon l'une quelconque des revendications 1 à 13, **caractérisée en ce que** la surface, apprêtée de manière à favoriser l'adhérence, de la feuille est traitée par traitement Corona.

**15.** Feuille polyester selon l'une quelconque des revendications 1 à 14, **caractérisée en ce que** la surface de feuille apprêtée de manière à favoriser l'adhérence supporte une couche de favorisation d'adhérence.

**16.** Feuille polyester selon la revendication 15, **caractérisée en ce que** la couche de favorisation d'adhérence contient un copolyester.

**17.** Feuille polyester selon la revendication 15, **caractérisée en ce que** la feuille de favorisation d'adhérence est un revêtement d'acrylate.

**18.** Feuille polyester selon la revendication 15, **caractérisée en ce que** la couche de favorisation d'adhérence est un revêtement hydrophile.

**19.** Feuille polyester selon l'une quelconque des revendications 1 à 18, **caractérisée en ce que** la surface de feuille apprêtée de manière à favoriser l'adhérence présente un angle de contact par rapport à l'eau inférieur ou égal à 64°.

**20.** Procédé de fabrication d'une feuille polyester selon l'une quelconque des revendications 1 à 19, comprenant les étapes consistant à :

a) fabriquer une feuille multicouche par coextrusion et moulage de la masse fondue pour donner des films fondus plats,
b) étirer la feuille de manière biaxiale,
c) traiter au moins une surface de feuille par traitement Corona ou flamme et/ou recouvrir la feuille d'un revêtement hydrosoluble, favorisant l'adhérence avant, pendant ou après l'étirage biaxial de la feuille et

d) thermofixer la feuille étirée.

**21.** Utilisation d'une feuille polyester selon l'une quelconque des revendications 1 à 19 sous forme de matériau d'emballage pour des produits alimentaires et denrées de luxe, sous forme d'étiquette, sous forme de carte, et pour la technologie médicale.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2647713 C
- EP 1125966 A
- EP 1125967 A
- WO 9413476 A
- EP 0144878 A
- US 4252885 A
- EP 0296620 A
- WO 9413481 A
- EP 0359017 B

**In der Beschreibung aufgeführte Nicht-Patentliteratur**

- *Kunststoff-Journal,* vol. 8 (10), 30-36
- *KUNSTSTOFF-JOURNAL,* 1974, vol. 11, 36-31
- **HANS LOOS.** Farbmessung. Verlag Beruf und Schule, 1989